# EUROPÄISCHE PATENTANMELDUNG

(11) **EP 2 124 114 A1**
(43) Veröffentlichungstag der Anmeldung: **25.11.2009**
(21) Anmeldenummer: 08009507.8
(22) Anmeldetag: 23.05.2008
(51) Int. Cl.: G05B 19/042

(54) **Verfahren zur Auswahl von auf einem Operator-System dargestellten Objekten**

(71) Anmelder: SIEMENS AKTIENGESELLSCHAFT, 80333 München (DE)
(72) Erfinder: Rock, Michael, 76829 Landau (DE)

(57) **Zusammenfassung**

Die Erfindung betrifft ein Verfahren zur Auswahl von auf einem Operator-System (5, 6) dargestellten Objekten (B1, H1, P1, R1, T1, V1, ...), wobei das Operator-System (5, 6) zum Bedienen und Beobachten eines Prozessablaufs in einer Anlage vorgesehen ist und wobei die Objekte (B1, H1, P1, R1, T1, V1, ...) Anlagenteile repräsentieren. Es werden Maßnahmen vorgeschlagen, durch welche eine einfache Auswahl interessierender Teile (B1, R1, R4 ... R9, P1, V1, V4, T1) einer auf einer Anzeigeeinheit dargestellten Anlage möglich ist.

## Beschreibung

Die Erfindung betrifft ein Verfahren zur Auswahl von auf einem Operator-System dargestellten Objekten, wobei das Operator-System zum Bedienen und Beobachten eines Prozessablaufs in einer Anlage vorgesehen ist und wobei die Objekte Anlagenteile repräsentieren. Ferner betrifft die Erfindung eine Anordnung zur Durchführung des Verfahrens.

Ein derartiges Verfahren und eine derartige Anordnung sind aus dem Siemens-Katalog "ST PCS 7 - November 2007", Kapitel 5 bis 7 bekannt. Dort umfasst ein so genanntes Operator-System gewöhnlich einen OS-Server und mehrere OS-Clients, mit welchen ein Operator den Prozessablauf beobachten und bei Bedarf in diesen eingreifen kann. Ein so genanntes Batch-System in Form eines Einzelplatz- und/oder Client-Server-Systems ist für eine Chargenprozessautomatisierung und ein so genanntes Route-Control-System ebenfalls in Form eines Einzelplatz- und/oder Client-Server-Systems zur Steuerung des Materialtransports über Transportwege und Wegenetze vorgesehen. Sowohl das Operator- als auch das Batch- und das Route-Control-System sind über einen geeigneten Bus mit einem oder mehreren Automatisierungssystemen verbunden, welche zusammen mit diesen Systemen einen oder mehrere Prozesse in einer Anlage steuern. Beispielsweise verarbeitet das Batch-System im Rahmen eines zu steuernden Chargenprozesses (Batch-Prozesses) ein mehrere Rezeptphasen aufweisendes Rezept sequentiell, wobei korrespondierend dazu ein online verbundenes Automatisierungsgerät zu jeder Rezeptphase jeweils einen dieser Rezeptphase zugeordneten Funktionsbaustein abarbeitet. Während dieser Batch-Verarbeitung werden die zu diesem Chargenprozess benötigten Teile der Anlage zusammen mit weiteren Anlagenteilen der zu steuernden Anlage in Form von Objekten auf einer Anzeigeeinheit des Operator-Systems angezeigt. Beispielsweise werden auch Objekte von Transportwegen, Wegenetzen oder verzweigten Leitungswegen auf der Anzeigeeinheit dargestellt, welche im Rahmen einer Route-Control-Steuerung für einen Materialtransport benötigt werden bzw. vorgesehen sind. Die Route-Control-Steuerung ermittelt geeignete Transportwege für einen Materialfluss in der Anlage und übermittelt schließlich dem oder den Automatisierungsgeräten geeignete Anweisungen, wodurch diese entsprechende Hardwarekomponenten zum Transport des Materials ansteuern. Aufgrund der Vielzahl von auf der Anzeigeeinheit dargestellten Anlagenteilen ist es für einen Operator schwierig, die zu einer Chargen- und/oder einer Wegesteuerung gehörigen Anlagenteile auszuwählen, um diese beispielsweise bedienen zu können.

Der vorliegenden Erfindung liegt die Aufgabe zugrunde, ein Verfahren der eingangs genannten Art anzugeben, welches eine einfache Auswahl interessierender Teile einer auf einer Anzeigeeinheit dargestellten Anlage ermöglicht. Darüber hinaus ist eine Anordnung zu schaffen, welche zur Durchführung des Verfahrens geeignet ist.

Im Hinblick auf das Verfahren wird diese Aufgabe durch die im kennzeichnenden Teil des Anspruchs 1, im Hinblick auf die Anordnung durch die im kennzeichnenden Teil des Anspruchs 3 angegebenen Maßnahmen gelöst.

Vorteilhaft ist, dass ein Operator einen zu steuernden Prozess leichter bedienen kann. Er kann gezielt interessierende, in Wirkverbindung stehende Teile der Anlage auswählen, wodurch eine gezielte Bedienung ermöglicht wird. Beispielsweise wird automatisch in Wirkverbindung stehenden Objekten einer Chargensteuerung (Batch-Prozesses) eine Kennung in Form eines Batch-Namens zugeordnet, mit welchem der Operator die Objekte auswählen kann, wobei z. B. nur die mit der ausgewählten Kennung versehenen Objekte angezeigt werden; die nicht mit der ausgewählten Kennung versehenen Objekte werden ausgeblendet. Dadurch wird die Übersichtlichkeit der zu bedienenden Anlagenteile weiter verbessert.

Für den Fall, dass die nicht mit der ausgewählten Kennung versehenen Objekte ausgeblendet werden sollen, ist vorgesehen, die mit der ausgewählten Kennung versehenen Objekte zu markieren, wobei in einer Ausgestaltung der Erfindung die mit der ausgewählten Kennung versehenen Objekte farblich markiert werden. Auch hier wird der zu beobachtende und zu bedienende Teil der Anlage übersichtlich angezeigt und die Wahrscheinlichkeit eines Bedienungsfehlers verringert.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: Bestandteile eines Prozessleitsystems,
- Figur 2: eine auf einem Operator-System dargestellte Anlage und
- Figur 3: einen Ausschnitt der Anlage gemäß Figur 2.

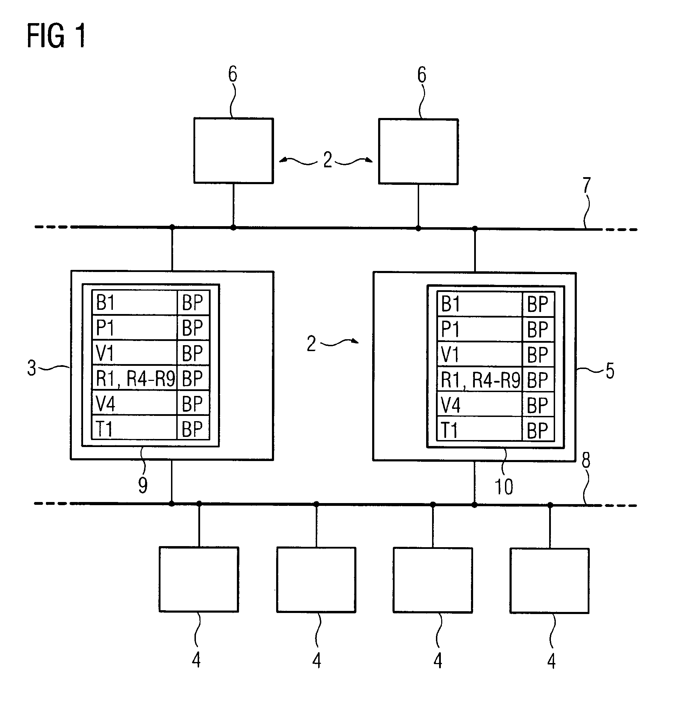

In Figur 1 sind mit 1 Bestandteile eines Prozessleitsystems bezeichnet, das mit einem Operator-System 2, mit einem Batch-Server 3 und mit Automatisierungsgeräten 4 versehen ist. Selbstverständlich weist das Prozessleitsystem weitere hier nicht dargestellte Bestandteile bzw. Automatisierungskomponenten auf, z. B. Automatisierungskomponenten in Form von an die Automatisierungsgeräte 4 angeschlossenen Sensoren, Aktoren oder dezentralen Peripheriegeräten, sowie Engineering-Systeme oder Maintenance-Stationen. Das Operator-System 2 ist zum Bedienen und Beobachten eines Prozessablaufs in einer Anlage vorgesehen und weist einen OS-Server 5 und mehrere OS-Clients 6 auf, wobei das Operator-System 2 und der Batch-Server 3 über geeignete Busverbindungen 7, 8 mit den OS-Clients 6 und den Automatisierungsgeräten 4 zum Austausch von Informationen verbunden sind. Eine auf dem Batch-Server 3 ablauffähige Batch-Software 9 steuert während eines Chargenprozesses zusammen mit geeigneten hier nicht dargestellten Hard- und Softwarekomponenten der Automatisierungsgeräte 4 die erforderlichen Anlagenteile, wobei diese Anlagenteile zusammen mit weiteren Teilen der Anlage in Form von Objekten auf einem der OS-Clients 6 einem Operator visuell dargestellt werden. Der Chargenprozess kann beispielsweise ein Dosier- und ein Heizvorgang zur Herstellung von Arzneimitteln sein, was bedeutet, dass die dazu erforderlichen Anlagenteile Dosierbehälter, Pumpen, Ventile und Heizkessel mit dazugehörigen Transportwegen sind, die im Rahmen dieses Chargenprozesses in Wirkverbindung stehen.

Um lediglich das Abbild der für diesen Dosier- und Heizvorgang erforderlichen Anlagenteile auf einem der OS-Clients 6 anzuzeigen oder um dieses Abbild dort visuell hervorzuheben, übermittelt die Batch-Software 9 einer auf dem OS-Server 5 ablauffähigen OS-Software 10 eine Kennung für die erforderlichen und in Wirkverbindung stehenden Anlagenteile dieses Chargenprozesses. Diese Kennung kann z. B. ein Batch-Name oder eine Nummer sein.

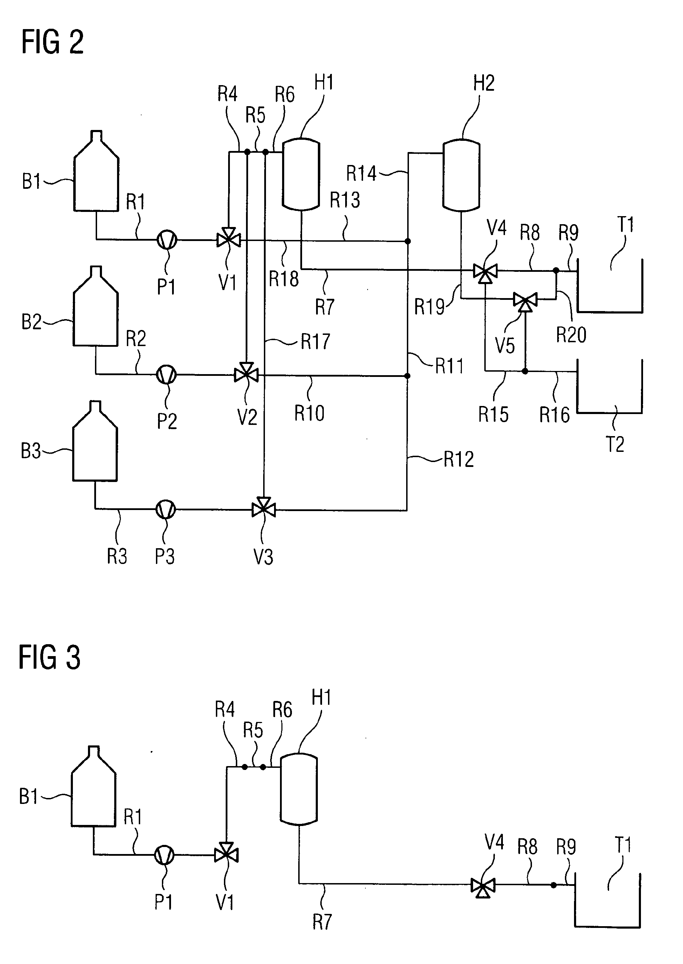

In diesem Zusammenhang wird auf Figur 2 verwiesen, in welcher auf einem Operator-System eine Anlage dargestellt ist. Teile dieser Anlage sind Behälter B1, B2, B3, Pumpen P1, P2, P3, Ventile V1, V2, V3, V4, V5, Heizkessel H1, H2, Tanks T1, T2 sowie Leitungsrohre R1, R2, ... R20.

Es wird angenommen, dass zur Verwirklichung eines Batch- bzw. Chargenprozesses mit Batch-Namen BP der Behälter B1, die Pumpe P1, der Heizkessel H1, die Ventile V1, V4, der Tank T1 und die dazugehörigen Leitungsrohre R1, R5 ... R9 erforderlich sind, wobei die Batch-Software 9 diesen Teilen als Kennung den Batch-Namen oder eine Nummer BP zuweist und diese Nummer BP der OS-Software 10 des OS-Servers 5 übermittelt. Dieser Server 5 belegt z. B. eine Funktionstaste einer Tastatur oder ein Feld einer Menü-Leiste eines der OS-Clients 6, wobei für den Fall, dass ein Operator die Funktionstaste oder das Menü-Feld aktiviert, der OS-Server 5 nur die mit dieser Nummer BP versehenen Objekte dieser Anlagenteile, welche auf dem OS-Server 5 mit dieser Nummer BP hinterlegt sind, - also den Behälter B1, die Pumpe P1, den Heizkessel H1, den Tank T1, die Ventile V1, V4 und die dazugehörigen Leitungsrohre R1, R5 ... R9 - auf einem der OS-Clients 6 anzeigt (Figur 3). Alle anderen zuvor dargestellten Anlagenteile werden dagegen ausgeblendet. Für den Fall, dass die nicht mit der Nummer BP versehenen Anlagenteile nicht ausgeblendet werden sollen, kann vorgesehen werden, die mit dieser Nummer BP versehenen Objekte innerhalb der Darstellung aller Anlagenteile beispielsweise farblich markiert anzuzeigen. Diese alternative Darstellung kann ebenfalls über eine Funktionstaste oder menügesteuert aktiviert werden.

## Patentansprüche

1. Verfahren zur Auswahl von auf einem Operator-System (5, 6) dargestellten Objekten (B1, H1, P1, R1, T1, V1, ...), wobei das Operator-System (5, 6) zum Bedienen und Beobachten eines Prozessablaufs in einer Anlage vorgesehen ist und wobei die Objekte (B1, H1, P1, R1, T1, V1, ...) Anlagenteile repräsentieren, **dadurch gekennzeichnet, dass**
- in Wirkverbindung stehende Objekte (B1, R1, R4 ... R9, P1, V1, V4, T1) im Rahmen einer Chargen- oder Wegesteuerung (3) automatisch mit einer Kennung (BP) versehen werden,
- die Kennung (BP) einem Operator angezeigt wird, wobei für den Fall, dass die Kennung (BP) durch den Operator ausgewählt wird, nur die mit dieser Kennung (BP) versehenen Objekte (B1, R1, R4 ... R9, P1, V1, V4, T1) oder diese Objekte (B1, R1, R4 ... R9, P1, V1, V4, T1) markiert auf dem Operator-System (5, 6) angezeigt werden.

2. Verfahren nach Anspruch 1, **dadurch gekennzeichnet, dass** die mit der ausgewählten Kennung (BP) versehenen Objekte (B1, R1, R4 ... R9, P1, V1, V4, T1) farblich markiert werden.

3. Anordnung mit einem Operator-System (5, 6) zum Darstellen von Objekten (B1, H1, P1, R1, T1, V1, ...) und zum Bedienen und Beobachten eines Prozessablaufs in einer Anlage, wobei die Objekte (B1, H1, P1, R1, T1, V1, ...) Anlagenteile repräsentieren, und mit einer Chargen- und/oder Wegesteuerung (3),
**dadurch gekennzeichnet, dass**
- die Chargen- oder Wegesteuerung (3) in Wirkverbindung stehende Objekte (B1, R1, R4 ... R9, P1, V1, V4, T1) automatisch mit einer Kennung (BP) versieht,
- die Chargen- oder Wegesteuerung (3) die Kennung (BP) dem Operator-System (5, 6) übermittelt, welches die Kennung (BP) einem Operator anzeigt,
- das Operator-System (5, 6) für den Fall, dass die Kennung (BP) durch den Operator ausgewählt wird, nur die mit dieser Kennung (BP) versehenen Objekte (B1, R1, R4 ... R9, P1, V1, V4, T1) oder diese Objekte (B1, R1, R4 ... R9, P1, V1, V4, T1) markiert anzeigt.

4. Anordnung nach Anspruch 3, **dadurch gekennzeichnet, dass** das Operator-System (5, 6) die mit der ausgewählten Kennung (BP) versehenen Objekte (B1, R1, R4 ... R9, P1, V1, V4, T1) farblich markiert.
